# EUROPÄISCHE PATENTSCHRIFT

(11) **EP 1 344 028 B1**
(45) Veröffentlichungstag und Bekanntmachung des Hinweises auf die Patenterteilung: **18.08.2004**
(21) Anmeldenummer: 01988850.2
(22) Anmeldetag: 23.10.2001
(51) Int. Cl.: G01F 11/02, B01L 3/00, B01L 3/02

(54) **PIPETTENSYSTEM UND PIPETTENARRAY**
PIPETTE SYSTEM AND PIPETTE ARRAY
SYSTEME DE PIPETTE

(30) Priorität: 24.10.2000 DE 10052819
(43) Veröffentlichungstag der Anmeldung: 17.09.2003
(73) Patentinhaber: Fraunhofer-Gesellschaft zur Förderung der angewandten Forschung e.V., 80686 München (DE)
(72) Erfinder: LISEC, Thomas, 25524 Itzehoe (DE); MÜHLMANN, Sascha, 25588 Oldendorf (DE); GRÜNZIG, Sven, 25524 Itzehoe (DE)
(74) Vertreter: Gagel, Roland, Dr.
(86) Internationale Anmeldenummer: PCT/DE2001/004023
(87) Internationale Veröffentlichungsnummer: WO 2002/035187

(56) Entgegenhaltungen:
- EP-A- 0 725 267
- DE-A- 19 737 173
- DE-A- 19 944 331
- US-A- 5 927 547
- US-A- 6 101 946
- DOERING M: "FLUESSIGKEITEN MIKROFEIN DOSIEREN" FEINWERKTECHNIK + MESSTECHNIK, CARL HANSER VERLAG. MUNCHEN., DE, Bd. 99, Nr. 11, 1. November 1991 (1991-11-01), Seiten 459-463, XP000274115

## Beschreibung

Die Erfindung betrifft ein Pipettensystem und Pipettenarrays aus Pipettensystemen mit einem Regelkreis bestehend aus einem Aktor einem Regelelement und einem Sensorelement zur Steuerung des Pipettiervorganges.

Das erfindungsgemäße Pipettensystem und Pipettenarray kann besonders günstig zum Pipettieren von Flüssigkeiten in HTS (High Throughput Screening), klinischer Chemie und chemischer Synthese zum Einsatz kommen. Es existieren viele Applikationen, z. B. in der klinischen Chemie, wo verschiedene Volumina mit hoher Genauigkeit (typ. 3 % Coefficient of Variation) parallel pipettiert werden müssen.
Gleichzeitig ist es erforderlich, die minimalen Probenvolumina möglichst gering zu halten, um den Verbrauch an Reagenzien zu minimieren bzw. eine steigende Packungsdichte der Mikrotiterplatten zu ermöglichen. Hierzu sollten Volumina im sub- Mikroliter Bereich durch ein Array aktiv geregelter, einzeln ansteuerbarer Pipetten übertragen werden können.

### Stand der Technik

Gebräuchlich ist die Verwendung von Spritzenpumpen als Antrieb beim Pipettieren geringer Flüssigkeitsmengen. Da moderne Spritzenpumpen auf Steppermotoren mit hoher Auflösung basieren, ist die präzise Manipulation von Flüssigkeitsmengen im Nanoliter - Bereich möglich. Gängige Nadelpipettierer verfügen über einen einzelnen Kanal, bestehend aus einer fest im Gehäuse installierten Spritzenpumpe, die über einen flüssigkeitsgefüllten Schlauch mit der räumlich verfahrbaren Pipettiernadel verbunden ist. Da sich der Verbindungsschlauch beim Verfahren der Nadel verformen kann und dessen Volumen somit nicht konstant bleibt, ist das minimale Pipettiervolumen auf den Mikroliter Bereich begrenzt. Solche Geräte werden z. B. beim Hit-Picking in HTS-Anwendungen verwendet, bei dem Proben aus einzelnen Wells einer größeren Anzahl von Mikrotiterplatten auf einer neuen Mikrotiterpiatte zusammengefaßt werden. Da jede Mikrotiterplatte seriell abgearbeitet werden muss, sind Nadelpipettierer zur Steigerung des Durchsatzes oftmals mit mehreren Pipettierkanälen ausgestattet. Soll jeder Kanal getrennt angesteuert werden, sind dementsprechend viele Spritzenpumpen erforderlich. Große Systeme dieser Art verfügen z.B. über 96 Kanäle, von denen jeweils 8 parallel durch eine Spritzenpumpe betätigt werden. Der Einbau von 96 Spritzenpumpen ist aus Platz- und Kostengründen nicht möglich.

Eine Alternative zu den Nadelpipettierern bilden Geräte, bei denen ein Array von Pipetten nach dem Kolbenhubprinzip bedient wird. Bei Ausführungen mit einem einzelnen Kolben werden die Proben über ein Luftpolster manipuliert. Aufgrund der Größe des Luftpolsters zwischen Kolben und Proben ist das minimale Volumen, das präzise pipettiert werden kann, auf den Mikroliter Bereich begrenzt. Andere Ausführungen bestehen aus einem Array aus einzelnen Spritzen. Da in jeder Spritze nur kleine Luftpolster entstehen, ist die Übertragung deutlich geringerer Mengen möglich. Zum Beispiel wird bei diesen Geräten ein minimales Pipettiervolumen von 100 Nanolitern angegeben. Allen derartigen Geräten ist gemeinsam, dass die Pipetten nicht einzeln angesteuert werden können sondern stets parallel arbeiten.

Dementsprechend ist deren Haupteinsatzgebiet der HTS-Bereich, wo möglichst viele Proben mitkonstantem Volumen maximal schnell von einer Mikrotiterplatte auf eine andere übertragen und vermessen werden müssen. Die Pipettiergenauigkeit bleibt dabei vergleichsweise gering, was den Einsatz auf Tests eher qualitativer Natur beschränkt.

### Gelöste Aufgabe

Der Erfindung liegt die Aufgabe zugrunde ein Pipettensystem zu schaffen, welches die Nachteile aus dem Stand der Technik vermeidet, insbesondere die exakte Steuerung jeder einzelnen Pipette innerhalb eines aus erfindungsgemäßen Pipettensystemen bestehenden Pipettenarrays ermöglicht.

### Beschreibung

Gemäß der vorliegenden Erfindung wird die Aufgabe durch die Merkmale des Anspruches 1 gelöst. Die vorliegende Erfindung stellt darüber hinaus in Anspruch 13 ein Verfahren zum Betreiben des Pipettensystems und/oder daraus bestehender Pipettenarrays zur Verfügung.
Die bevorzugten Ausführungsformen sind Gegenstand der abhängigen Ansprüche.
Das erfindungsgemäße Pipettensystem umfaßt eine Pipettenkapillare, einen Aktor, ein Regelelement und ein Sensorelement. Das Sensorelement bildet zusammen mit dem Regelelement und dem Aktor einen Regelkreis zur Steuerung des Pipettiervorganges.
Die Pipettenkapillare ist mindestens teilweise mit einem Systemmedium gefüllt. Der Aktor ermöglicht die Verschiebung der räumlichen Position einer Phasengrenze zwischen dem Systemmedium und einem zweiten Medium innerhalb der Kapillare. Unter Phasengrenze ist dabei jeder hinreichend scharfe Übergang zwischen unterschiedlichen Medien zu verstehen. Also z.B. der Übergang zwischen einer Flüssigkeit und einem Gas.

Die Phasengrenze ist bevorzugt die Grenze einer Blase des zweiten Mediums innerhalb des Systemmediums. Das Sensorelement ist derart ausgebildet, dass es die Position der Phasengrenze oder der Blase innerhalb der Kapillare detektieren kann. Das Sensorelement bildet zusammen mit dem Regelelement und dem Aktor einen Regelkreis, dergestalt, dass mittels des Aktors die Verschiebung der Position des Systemmediums innerhalb der Pipettenkapillare, abhängig von der mit dem Sensorelement gemessenen Position der Phasengrenze oder der Blase, über das Regelelement steuerbar ist. Das Sensorelement ist also durch eine elektronische Schaltung mit dem Aktor verbunden, welche die Ausgangssignale des Sensorelements erfasst und verarbeitet und den Aktor in Abhängigkeit von diesen Signalen gezielt ansteuern kann. Der Aktor kann entweder selbst das Systemmedium in Bewegung setzen, also eine Strömung erzeugen oder z. B. in Form eines Ventils derart ausgebildet sein, dass er eine durch einen äußeren Antrieb erzeugbare Strömung des Systemmediums steuern und/oder beeinflussen kann. Die Phasengrenze kann also innerhalb der Kapillare durch geeignetes Ansteuern des Aktors bei gleichzeitiger Aktivierung des Antriebs innerhalb eines überwachten Bereiches gezielt positioniert werden. Bevorzugt besteht der Antrieb aus einem Reservoir mit Systemmedium, welches derart mit der Pipettenkapillare verbunden ist, dass vom Reservoir Systemmedium in die Pipettenkapillare einfließen kann. Das Reservoir kann z.B. über einen Schlauch mit einem Ende der Pipettenkapillare verbunden sein. Innerhalb des Reservoirs kann das Systemmedium mit Druck derart beaufschlagt werden, dass ein Antrieb für einen Strom des Systemmediums in der Pipettenkapillare besteht.
In bestimmten Fällen können Aktor und Antrieb zusammenfallen. Ist das Gerät z. B. nur mit einer einzelnen Pipette ausgestattet, kann auch unmittelbar eine Spritzenpumpe mittels des Ausgangssignals des Sensorelements gesteuert werden.
Die Aufnahme und Abgabe von gasförmigen oder flüssigen Proben über eine Pipettierspitze ist mit der Position der überwachten Phasengrenze innerhalb der Kapillare korreliert. Das aufgenommene oder abgegebene Probenvolumen ist dabei zu der Lageänderung der Position der Phasengrenze proportional.

Als Systemmedium kommt prinzipiell jede Flüssigkeit oder jedes Gas in Frage, bevorzugt wird eine elektrisch leitfähige Flüssigkeit eingesetzt. Ist das Systemmedium eine Flüssigkeit, so kann das zweite Medium entweder ein Gas oder eine nicht mit dem Systemmedium mischbare weitere Flüssigkeit sein. Sind beide Medien Flüssigkeiten, so muss bei Einsatz eines Leitfähigkeitssensors ein signifikanter Leitfähigkeitsunterschied zwischen den Flüssigkeiten bestehen. Im Folgenden wird ohne Einschränkung der Allgemeinheit meist von Flüssigkeiten gesprochen. Diese Flüssigkeiten werden auch als Systemflüssigkeit bezeichnet.
Als Systemflüssigkeit kann eine beliebige, wässrige oder nichtwässrige Lösung dienen, die mit den in der Pipette verwendeten Materialien verträglich ist.

Als Sensorelement wird ein Sensor gemäß der deutschen Patentanmeldung DE 199 44331 eingesetzt. Es handelt sich hierbei um einen Mikrosensor zur Positionsmessung von Flüssigkeiten in Kapillaren, dieser beruht auf dem Prinzip von Leitfähigkeitsmessungen. Dabei ist jedoch nur eine Änderung der Leitfähigkeit für das Messprinzip wesentlich. Die Absoluthöhe der Leitfähigkeit der Arbeitsflüssigkeit spielt eine untergeordnete Rolle. In Falle des Einsatzes eines derartigen Sensors muss die Systemflüssigkeit elektrisch leitfähig sein, falls nicht das zweite Medium elektrisch leitfähig ist.
In der Kapillare befindet sich eine Gasblase, die auf beiden Seiten von der Arbeitslösung umschlossen ist und innerhalb der Kapillare über einem Sensorchip hin- und her bewegt werden kann. Anstelle der Gasblase kann auch eine nichtleitende Flüssigkeit verwendet werden, die mit der Arbeitslösung nicht mischbar ist. Im Folgenden wird, ohne Einschränkung der Allgemeinheit, nur von einer Blase gesprochen. Wesentlich ist, dass zwischen Arbeitsflüssigkeit und Blaseninhalt ein signifikanter Leitfähigkeitsunterschied besteht. Vorstellbar ist daher auch, dass die Arbeitsflüssigkeit nicht leitend ist und die Blase aus einer leitfähigen Flüssigkeit besteht. Es befindet sich also mindestens eine Grenze zwischen zwei unterschiedlichen Leitfähigkeiten der Kapillarenfüllung im Bereich über dem Sensorelement.
Der Sensorchip besteht aus einem Substrat bevorzugt aus Silizium, Glas oder Kunststoff.

Darauf sind mikrostrukturierte, teilpassivierte Metallelekroden, bevorzugt aus Platin, Iridium oder Gold aufgebracht. Iridium zeichnet sich durch einen besonders geringen Polarisationswiderstand in wässriger Lösung aus. Die Elektroden bestehen aus jeweils einer bevorzugt konstanten Anzahl von sich in einem bevorzugt konstanten Abstand befindenden Teilelektroden, welche untereinander mit elektrischen Verbindungen vernetzt sind. DieTeilelektroden von bevorzugt zwei Elektroden stehen sich paarweise bevorzugt mit einem konstanten Abstand als Teilelektrodenpaare gegenüber. Die sich wiederholende Grundgeometrie (Mäander) besteht also aus bevorzugt zwei Elektrodenpaaren, welche wiederum aus Teilelektrodenpaaren bestehen. Diese Grundgeometrie wiederholt sich periodisch über die gesamte Sensorchiplänge, Der Abstand zwischen den Teilelektrodenpaaren in Längsrichtung, d.h. in Richtung der zu messenden Blasenbewegung, ist, in bevorzugter Weise, stets derselbe. Dies gilt auch bei benachbarten Teilelektrodenpaaren, weiche zu benachbarten Mäandern gehören. Dabei sind bevorzugt die elektrischen Verbindungen zwischen den Teilelektroden der Elektroden mit einer passivierenden Schicht überzogen, wogegen die Teilelektroden selbst die sensoraktiven Bereiche des Sensorchips darstellen und sich daher direkt an der Oberfläche, welche mit der Arbeitsflüssigkeit in Berührung kommt, befinden. Die elektrischen Verbindungen können derart positioniert sein, dass diese von der Wandung der Kapillare vollständig gegenüber dem Innenraum der Kapillare abgedichtet sind. Wenn die Kapillare aus einem isolierenden Material besteht kann dann auf eine Passivierungsschicht verzichtet werden. Die Passivierung ist nur notwendig wenn die elektrischen Verbindungen mit der Systemflüssigkeit in Kontakt kommen können oder die Kapillare aus elektrisch leitfähigem Material besteht. Der Sensor wird so seitlich an der Kapillare, welche z.B. aus Glas oder Kunststoff besteht, angebracht, dass sich die aktiven Bereiche der Elektroden, also die Teilelektroden, im Innenraum der Kapillare befinden. Die Anschlüsse (Bondpads) der Elektroden der einzelnen Mäander liegen dagegen außerhalb der Kapillare. Hierzu wird die Kapillarenwand partiell durch den Sensorchip ersetzt.
Befindet sich eine leitfähige Flüssigkeit in der Kapillare und wird eine Spannung angelegt, so fließt ein Strom zwischen den gegenüberliegenden Teilelektroden eines Mäanders. Die Impedanz des Mäanders wird unter anderem von der benetzten Elektrodenfläche, d.h. der Anzahl der benetzten Teilelektrodenpaare, bestimmt. Mit zunehmender benetzter Fläche nimmt sie ab. Dieser Effekt kann zur Detektion der Position einer Luftblase oder allgemein einer Leitfähigkeitsgrenze, die den Mäander ganz oder teilweise überdeckt, bzw. im Falle einer einzelnen Leitfähigkeitsgrenze, die sich über dem Mäander befindet, ausgenutzt werden. Im Folgenden wird zur Beschreibung der Funktionsweise des Sensors ohne Einschränkung der Allgemeinheit von einer Blase gesprochen. Die Aussagen gelten jedoch auch für das Vorhandensein einer einzigen Leitfähigkeitsgrenze. Es wird dann nicht eine Blasenposition bestimmt sondern die Lage der Leitfähigkeitsgrenze zwischen zwei Teilelektrodenpaaren eines Mäanders oder die Lage der Leitfähigkeitsgrenze zwischen zwei Mäandern. Eine Blase stellt einen Spezialfall dar, bei dem zwei Leitfähigkeitsgrenzen innerhalb der Kapillarenfüllung liegen.

Die Position der Blase lässt sich im Ruhezustand aus dem Vergleich der Widerstandswerte aller Mäander ermitteln. Unabhängig von der konkreten Arbeitsflüssigkeit zeigen alle von der Flüssigkeit benetzten Mäander einen minimalen Widerstandswert. Ist die Blase ausreichend groß, so dass mindestens ein Mäander vollständig von ihr überdeckt wird, ergibt sich für diesen Mäander ein maximaler Widerstandswert. Die angrenzenden, nur teilweise bedeckten Mäander weisen Zwischenwerte des Widerstandes auf. Zur Bestimmung der genauen Position der Flüssigkeitsoberfläche im Zwischenbereich eines Mäanders ist die Kenntnis der Form des Widerstandsverlaufes (Referenzwiderstandskurve) beim Überstreichen eines Mäanders und des Maximal- und Minimalwertes des Widerstandes des betreffenden Mäanders notwendig. Durch Interpolation auf die Kurve bekannter Form und mit bekanntem Minimal- bzw. Maximalwert kann dann jeder Zwischenwiderstandswert einem bestimmtenTeilelektrodenpaar des entsprechenden Mäanders zugeordnet, und somit die Blasenposition oder Leitfähigkeitsgrenzenposition genau bestimmt, werden.

Sind die Benetzungseigenschaften der Arbeitsflüssigkeit gegenüber dem Sensorelement so, dass sich kein dauerhafter Flüssigkeitsfilm auf dem Sensorelement bildet und ist die Wanderungsgeschwindigkeit der Blase nicht zu hoch, dann treten während der Bewegung der Blase über die Teilelektrodenpaare eines Mäanders hinweg charakteristische abrupte Widerstandsänderungen (Sprünge) auf. Im Falle einer wässrigen Lösung bedeutet dies eine hydrophobe Oberfläche des Sensorelements, wobei die Lösung jedoch nicht so stark abgestoßen werden darf, dass sich keine Benetzung, in den Bereichen des Sensorelements, welche von der Arbeitsflüssigkeit überdeckt sind, ausbilden kann. Idealer Weise wird das Sensorelement immer exakt dort von der Arbeitsflüssigkeit benetzt wo es vom Arbeitsflüssigkeitsstand überdeckt ist. Werden alle Mäander parallel überwacht, kann aus der Gesamtzahl der Sprünge während der Blasenwanderung die von der Blase zurückgelegte Wegstrecke und damit das bewegte Flüssigkeitsvolumen bestimmt werden.

In einem, aus Pipetten mit erfindungsgemäßen Pipettensystemen gebildetem Pipettenarray sind alle Pipetten getrennt regelbar. Es können entsprechend der Aktivierung des Antriebs (Unter- oder Überdruck) unabhängig voneinander unterschiedliche Probenvolumina sowohl aufgenommen als auch abgegeben werden. Es kann aber auch vorteilhaft sein die Pipetten nur in einer Richtung, d.h. entweder beim Aufnehmen oder beim Abgeben von Proben, getrennt zu regeln und in der jeweils anderen Richtung parallel arbeiten zu lassen.

Da der Füllstand in der Pipette durch den Sensor überwacht wird, muss der Aktor selbst nicht präzise wie z. B. eine Spritzenpumpe arbeiten, sondern kann in Abhängigkeit vom Sensorsignal gesteuert werden. Gleichzeitig lassen sich unterschiedliche Aktoren und Antriebe miteinander kombinieren.
Da der Aktor und das Sensorelement direkt in der Pipettenkapillare eingebaut sein können und das Regelelernent nur einen geringen Platzbedarf hat ermöglicht das erfindungsgemäße Pipettensystem den Aufbau von Pipettenarrays deren einzelne Pipetten unabhängig voneinander steuerbar sind und jeweils unterschiedlich große Probenvolumina pipettieren können.

Die vorliegende Erfindung wird ohne Beschränkung des allgemeinen Erfindungsgedankens im Folgenden anhand von Ausführungsbeispielen unter Bezugnahme auf die Zeichnungen beschrieben.
Fig. 1 zeigt ein erfindungsgemäßes Pipettensystem.
Fig. 2 zeigt den Aufbau eines Pipettensystems nach dem Stand der Technik
Fig. 3 zeigt den Aufbau von Pipettenarrays, weiche nach dem Kolbenhubprinzip, mit parallel arbeitenden Pipetten arbeiten nach dem Stand der Technik.
Fig. 4. zeigt einen elektronischen Sensor nach der Patentanmeldung DE 199 44 331
Fig. 5 zeigt ein erfindungsgemäßes Pipettenarray mit Ventilen als Aktoren
Fig. 6 zeigt ein erfindungsgemäßes Pipettenarray mit Elektrolysezellen als Aktoren und einem Kolbenarray als externem Antrieb.
Fig. 7 zeigt den Ablauf des Befüllens eines erfindungsgemäßen Pipettenarrays mit dem Systemmedium und darauf folgendem Pipettiervorgang.

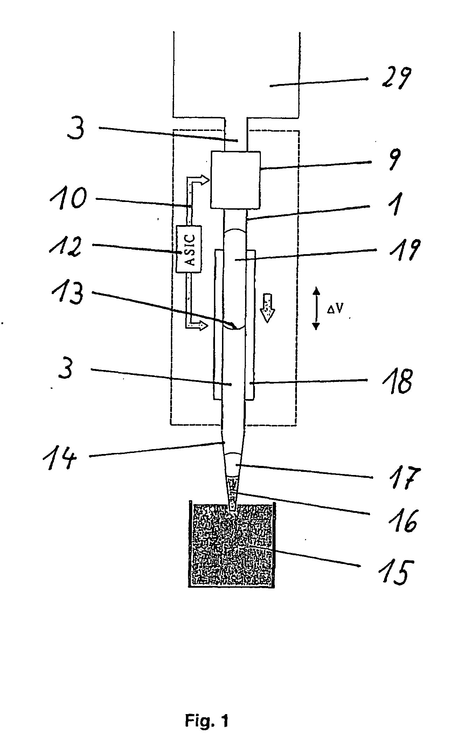

Fig. 1 zeigt den schematischen Aufbau einer regelbaren Pipette mit dem erfindungsgemäßen Pipettensystem. Die Pipette verfügt über einen Füllstandsensor (18), innerhalb einer Kapillare (1). Der Füllstandssensor besteht aus einem seitlich in Längsrichtung angebrachten Chip, der die Position einer Phasengrenze (13) innerhalb der Kapillare, bevorzugt zwischen Luft und einer Flüssigkeit kontinuierlich überwachen kann. Im Falle der Ausprägung des Füllstandssensor als Sensorelement nach der Patentanmeldung DE 199 44 331 enthält der Chip mikrostrukturierte Metallelektroden, deren aktive Bereiche sich innerhalb der Kapillare befinden. Sie sind über die gesamte Länge des Chips verteilt, wobei sich eine bestimmte Anordnung, im folgenden auch Mäander genannt, ständig wiederholt. Am oberen Ende der Kapillare des Füllstandssensors befindet sich ein Aktor (9) der einen Strom der durch die Kapillare fließt aktiv beeinflussen kann. Bei dem Strom kann es sich um Flüssigkeitsstrom oder Gasstrom handeln. Im Folgenden wird ohne Einschränkung der Allgemeinheit von einem Flüssigkeitsstrom gesprochen. Der Aktor kann z. B. ein elektromagnetisches Ventil sein. Ein Regelelement (12) aus einer elektronischen Schaltung, z. B. einem ASIC, verbindet Füllstandssensor und Aktor in einem Regelkreis (10). Alle zum Pipettensystem gehörenden Bestandteile werden in der Figur durch den gestrichelten Rahmen zusammengefasst.
Der obere Ausgang der Pipette ist mit einem Antrieb (29) verbunden, der durch pneumatische oder hydraulische Krafteinwirkung einen Fluidstrom erzeugen, d. h. eine Flüssigkeit in der Pipette bewegen kann. Die Systemflüssigkeit (3) in der Pipette umschließt eine Blase aus einem zweiten Medium (19), z.B. ein Luftsegment, im folgenden die Messblase, dessen eine Phasengrenze, im folgenden auch Meniskus, sich in der Kapillare innerhalb der aktiven Elektrodenbereiche des Füllstandssensors befindet. Am unteren Ausgang der Pipette ist eine bevorzugt auswechselbare Pipettenspitze (14) angeschlossen. In der Spitze kann sich eine Probe (16) befinden. Die Probe kann in die Pipettierspitze aus einem Probengefäß (15) angesaugt oder Abgegeben werden, wenn durch den Antrieb ein Unter- oder Überdruck über den Aktor auf die Systemflüssigkeit ausgeübt wird. Die Probenlösung ist von der
Systemflüssigkeit durch ein weiteres Luftsegment, im folgenden die Trennblase (17),separiert.
Verschiebt sich die Messblase und somit die überwachte Phasengrenze innerhalb der Kapillare, wird die Position der Phasengrenze oder der Messblase im Fall der Verwendung des Sensors aus der Patentanmeldung DE 199 44 331 gemäß der im folgenden beschriebenen statischen Methode der Füllstandsdetektion vom Füllstandssensor detektiert.

Jeder vollständig von der Systemflüssigkeit bedeckte Mäander eines Sensors zeigt einen Maximalwert des Ausgangssignals. Wird ein beliebiger Mäander hingegen vollständig von der Luftblase überdeckt, ist dessen Ausgangssignal gleich Null. Wird ein beliebiger Mäander nur teilweise von der Luftblase überdeckt, d. h. befindet sich die Phasengrenze zwischen Systemflüssigkeit und Luft innerhalb dieses Mäanders, erscheinen Zwischenwerte. Sind die Maximalwerte für alle Mäander bekannt, können die Zwischenwerte für jeden Mäander durch Interpolation auf eine Linie zwischen Null und dem Maximalwert einem der Elektrodenpaare des entsprechenden Mäanders zugeordnet und somit die Lage des Phasenüberganges über die gesamte Länge des Sensors eindeutig ermittelt werden. Andersherum, für jeden Mäandereines Sensors können bei bekanntem Maximalwert konkrete Ausgangssignalwerte errechnet werden, die einer bestimmten Position der überwachten Phasengrenze entsprechen würden.
Voraussetzung ist, dass die Maximalwerte aller Mäander des Sensors sich während des Dosiervorganges nicht ändern.
Bleibt der Querschnitt der Kapillare über deren Länge konstant, ist die Verschiebung der überwachten Phasengrenze proportional zum Systemflüssigkeitsvolumen, das nach oben oder nach unten aus der Kapillare verdrängt wird. Wandert die überwachte Phasengrenze z. B. nach unten, drückt die verdrängte Systemflüssigkeit ihrerseits einen Teil der Probe aus der Pipettenspitze heraus. Ist die Trennblase klein genug, so dass die Komprimierbarkeit von Luft vernachlässigt werden kann, entspricht das abgegebene Probenvolumen mit hoher Genauigkeit dem Volumen der verdrängten Systemflüssigkeit. Verschiebt sich die überwachte Phasengrenze nach oben und taucht die Pipettenspitze dabei in ein Probengefäß ein, wird ein der Verschiebung äquivalentes Probenvolumen aufgenommen.
Da der Aktor über eine elektronische Regelung (ASIC) mit dem Sensor verbunden ist, kann der Phasenübergang durch eine geeignete Ansteuerung des Aktors bei gleichzeitiger Aktivierung des Antriebs (Überdruck oder Unterdruck) innerhalb des vom Füllstandssensor überwachten Bereiches der Kapillare gezielt positioniert werden. Auf diese Weise können folglich genau definierte Probenvolumina aufgenommen oder abgegeben werden.

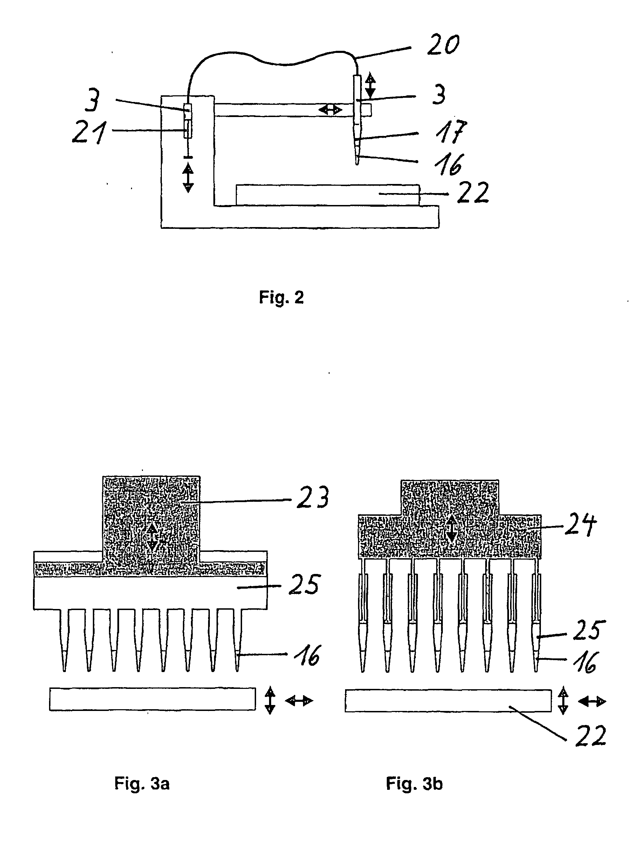

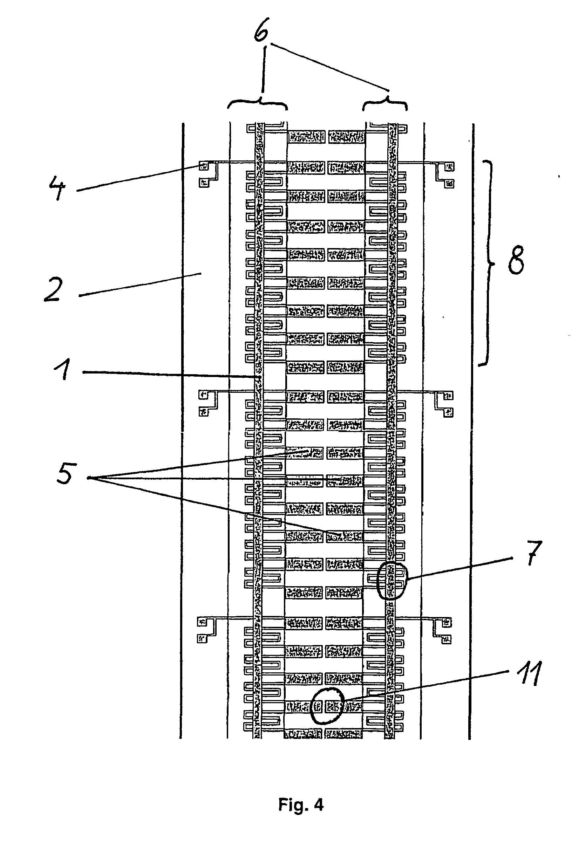

Fig. 2 zeigt einen Nadelpipettierer mit einem einzelnen Kanal, bestehend aus einer fest im Gehäuse installierten Spritzenpumpe (21), die über einen flüssigkeitsgefüllten Schlauch (20) mit der räumlich verfahrbaren Pipettiernadel verbunden ist nach dem Stand der Technik. Die Pipette wird durch eine Spritzenpumpe mittels einer Systemflüssigkeit (3) betätigt und kann über der Mikrotiterplatte (22) verfahren werden. Die Luftblase (17) in der Pipettenspitze (14) dient zur Trennung der Systemflüssigkeit von der Probe (16).

Fig. 3 zeigt schematisch mögliche Varianten von Geräten, bei denen ein Array von parallel arbeitenden Pipetten nach dem Kolbenhubprinzip bedient wird, nach dem Stand der Technik. Bei der Ausführung in Fig. 3a werden die Proben (16) mit einem einzelnen Kolben (23) über ein Luftpolster (25) manipuliert. Aufgrund der Größe des Luftpolsters zwischen Kolben und Proben ist das minimale Volumen, das präzise pipettiert werden kann, auf ca. 1 Mikroliter begrenzt. Die Ausführung in Fig. 3b entspricht einem Array aus einzelnen Spritzen, welche mittels eines Kolbenarrays (24) betätigt werden. Da in jeder Spritze nur kleine oder gar keine Luftpolster (25) entstehen, ist die Übertragung deutlich geringerer Probenmengen (16) möglich.

In Fig. 4 ist ein Ausschnitt eines Sensors gemäß der Patentanmeldung DE 199 44 331 mit einer bevorzugten Elektrodengeometrie in der Draufsicht dargestellt. Die aktiven, freiliegenden Bereiche (5) der Elektroden befinden sich innerhalb einer Kapillare (1) und sind über die gesamte Länge des Sensorchips (2) verteilt. Die Elektrodenstruktur besteht dabei aus einer sich ständig wiederholenden Anordnung. Jede Elektrode besteht aus mehreren sensoraktiven Teilelektroden (5), wobei immer zwei Elektroden ein Elektrodenpaar (Mäander) (8) bilden. Die Teilelektroden der Elektrodenpaare stehen sich als Teilelektrodenpaare (11) gegenüber. Jede Elektrode hat dabei eine eigene elektrische Anschlussmöglichkeit (Bondpad) (4). Aufeinanderfolgende Mäander sind so angeordnet, dass der Abstand zwischen den Teilelektrodenpaaren (11) über die gesamte Chiplänge stets konstant ist. Jeder Mäander besteht aus zwei Metallelektroden mit 8 einander gegenüberliegenden Teilelektrodenpaaren.

Die einzelnen Teilelektroden auf jeder Seite eines Mäanders sind in Reihe geschaltet. Die elektrische Verbindung zwischen den einzelnen Teilelektroden auf einer Seite eines Mäanders hat dabei einen ohmschen Widerstand welcher nicht zu gering sein sollte. Bei der dargestellten Ausführungsform wird der Widerstand durch die Verlängerung der elektrischen Verbindung (7) in Schlangenlinienform erhöht. Der Abstand zwischen benachbarten Teilelektrodenpaaren (11) in Längsrichtung von einigen 10 Mikrometer. Je geringer der Abstand der Teilelektrodenpaare in Längsrichtung, desto höher ist die Auflösung des Sensors, d.h.desto kleinere Flüssigkeitsmengen können dosiert werden. Die freiliegenden, aktiven Elektrodenbereiche können mit einer Flüssigkeit innerhalb der Kapillare in Kontakt kommen.
Die Ableitungen zu den außerhalb der Kapillare liegenden Bondpads sind von einer Passivierungsschicht (6) bedeckt, wenn sie nicht von der Kapillarenwandung überdeckt werden.

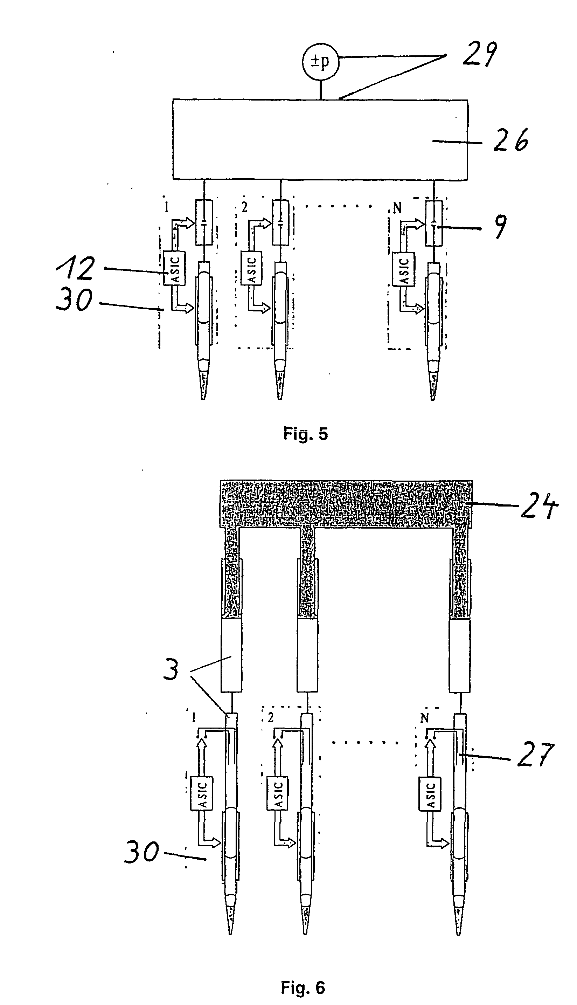

Der in Fig. 5 dargestellte Aufbau zeigt ein Dosiergerät mit einem Array aus N einzeln ansteuerbaren und regelbaren Pipetten (30), die mit elektromagnetischen Ventilen als Aktoren (9) versehen sind. Miniaturventile, die dem Rastermaß einer 96'er Mikrotiterplatte genügen, sind kommerziell erhältlich. Das Ventil wird über eine auf der Pipette integrierte Schaltung (ASIC) als Regelelement (12), die die Sensorsignale verarbeitet, gemäß vorgegebenen Sollwerten gesteuert. Den Antrieb (29) bildet ein gemeinsames Reservoir (26) am oberen Ausgang der Pipetten, in dem z. B. pneumatisch oder hydraulisch definierter Unter- oder Überdruck (±p) erzeugt werden kann. In dieser Ausführungsform wird nur ein gemeinsamer Antrieb für alle Pipettensysteme verwendet.

In Fig. 6 ist eine andere Gerätevariante mit N einzeln ansteuerbaren und regelbaren Pipetten (30) dargestellt. In diesem Fall enthält jede Pipette eine Elektrolysezelle (27) als Aktor. Ist die Systemflüssigkeit (3) eine wässrige Lösung, kommt es beim Anlegen einer elektrischen Spannung zur Gasentwicklung in der Elektrolysezelle und folglich zum Druckaufbau in der Pipette. Ist das Volumen oberhalb jeder Pipette unveränderlich, so dass die Systemflüssigkeit nicht nach oben ausweichen kann, wird in Korrelation zum entstandenen Gasvolumen Probenflüssigkeit aus der Pipettenspitze verdrängt. Dieser Vorgang kann analog zum Ventil über den in die Pipette integrierten ASIC gemäß vorgegebenen Sollwerten gesteuert werden. Als Antrieb kann hier z. B. ein Kolbenarray (24) oder auch eine Spritzenpumpe dienen. Die Gasblasen könnten auch durch Heizen der Systemflüssigkeit oberhalb des Sensorelements erzeugt werden. Eine weiter Variante des Aktors könnte durch das Verengen oder Erweitern des Durchmessers der Kapillare oberhalb des Sensorelements verwirklicht werden. Hierzu kann z.B. von außen mit einem herkömmlichen Piezoelement oder einem Bimetallstreifen auf ein oberhalb des Sensorelements an die Pipettenkapillare anschließendes verformbares Schlauchstück, gesteuert vom Ausgangssignal des Sensorelements, gedrückt werden.

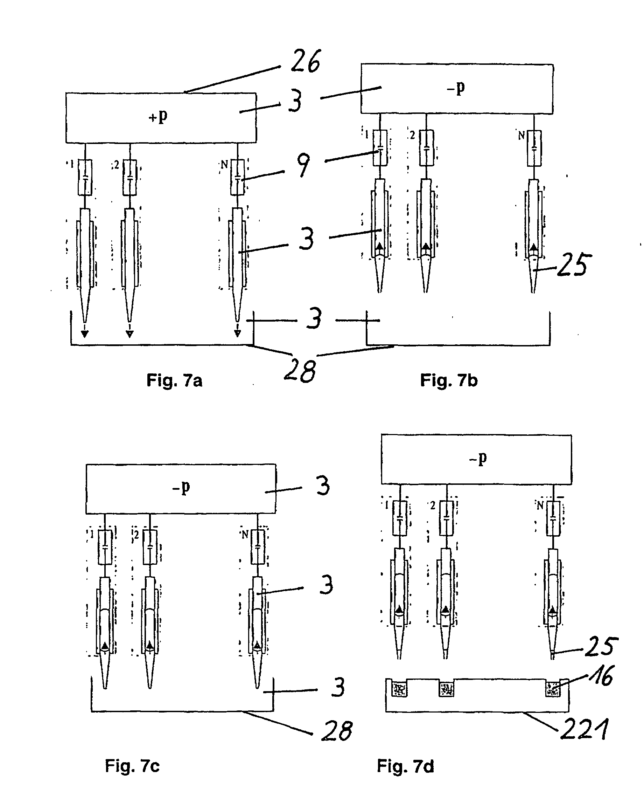

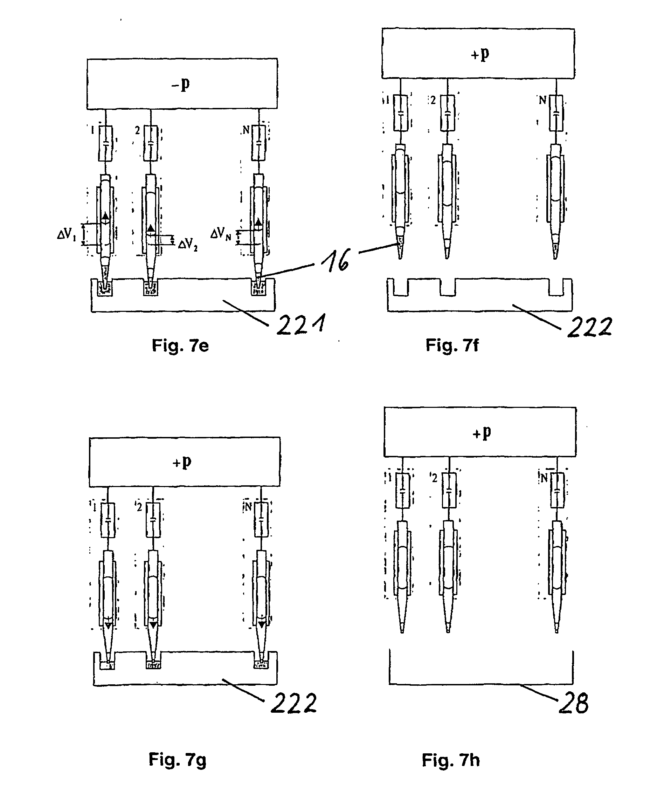

Fig. 7 zeigt unter Verwendung des in Fig. 5 dargestellten Gerätes den Ablauf des parallelen Übertragens von Proben (16) mit unterschiedlichen Volumina von einer Mikrotiterplatte (22) auf eine andere. Strömungsrichtungen sind in den Figuren jeweils durch Pfeile angedeutet.

Zuerst werden alle Pipetten mit Systemflüssigkeit (3) durchgespült. Dazu muss im Reservoir (26) ein bestimmter Überdruck "+p" eingestellt, alle Anktorventile (9) eins bis N gleichzeitig geöffnet und nach einer vorgegebenen Zeit wieder geschlossen werden. Gemäß Fig. 7a sind dann alle Pipetten vollständig mit Systemflüssigkeit gefüllt. Bevorzugt bei Einsatz eines Sensors nach der Patentanmeldung DE 199 44 331 kann nun für jeden Sensor die maximalen Ausgangssignale aller Mäander bestimmt und als Referenzwerte abgespeichert werden.

Im zweiten, in Fig. 7b dargestellten Schritt wird in jeder Pipette eine Messblase erzeugt. Dazu wird das Reservoir auf Unterdruck "-p" umgeschaltet und alle Ventile zeitgleich geöffnet, wobei die Pipettenspitzen über das Niveau der Systemflüssigkeit in einer Spülwanne (28) angehoben sind. Dadurch wird in jede Pipette Luft (25) angesaugt. Der Vorgang wird durch Schließen der Ventile gestoppt, wenn der obere Meniskus der Luftblase in jeder Pipette eine vorgegebene Position innerhalb des Sensorbereiches erreicht hat. Es ist bevorzugt, für alle Pipetten dieselbe Position auszuwählen, um gleichgroße Messblasen zu erhalten. Die vorgegebene Position innerhalb des Sensorbereiches befindet sich bei Einsatz eines Sensors nach der Patentanmeldung DE 199 44 331 bevorzugt am untersten Mäander.

Anschließend wird, wie in Fig. 7c dargestellt das Pipettenarray in eine Wanne mit Systemflüssigkeit (Spülwanne (28)) abgesenkt, bis die Pipettenspitzen in die Systemflüssigkeit (3) eintauchen. Werden die Ventile jetzt zeitgleich geöffnet und herrscht im Reservoir Unterdruck (-p), wird Systemflüssigkeit angesaugt. Der Vorgang wird für jede Pipette individuell durch Schließen des Ventils gestoppt, wenn der untere Meniskus der Luftblase die gewünschte, bevorzugt für alle Pipetten gleiche Position erreicht hat. Diese Position liegt bei Einsatz des Sensorelements der Patentanmeldung DE 199 44 331 bevorzugt auf einem der untersten Mäander, um ein möglichst großes Probenvolumen aufnehmen zu können.

Im vierten Schritt werden in den Pipettenspitzen die Trennblasen erzeugt, die ein Vermischen der Proben mit der Systemflüssigkeit vermeiden sollen. Dazu wird das Pipettenarray soweit angehoben, dass der Kontakt aller Spitzen zur Flüssigkeit unterbrochen wird. Wie in den vorangegangenen Schritten wird das Ansaugen der Luft (25) durch zeitgleiches Öffnen der Ventile gestartet und unabhängig für jede Pipette an der unteren Phasengrenze der Messblase überwacht. Dem Sollwert entsprechend wird durch individuelles Schließen des Ventils jeder Pipette auf einer bestimmten Position eines bestimmten Mäanders weiter oben gestoppt. Dieser Vorgang wird in Fig. 7d dargestellt. Diese Position muss nicht immer dieselbe sein. In Abhängigkeit von den Probenvolumina bzw. den Eigenschaften der Probenlösungen (16) können die Trennblasen von Pipette zu Pipette unterschiedlich groß gestaltet werden.

Die Pipettensysteme sind nun zur Pipettierung von Probenflüssigkeiten bereit. Dazu wird das Pipettenarray über einer Quell- Mikrotiterplatte (221) positioniert und soweit in die Wells in denen sich die Proben (16) befinden abgesenkt, bis die Pipettenspitzen in die darin enthaltenen Flüssigkeiten eintauchen. Für jede Pipette wird unabhängig von den anderen das Ventil geöffnet und solange Probenflüssigkeit angesaugt, bis die überwachte untere Phasengrenze der Messblase die vorgegebene Position erreicht hat. Dann wird das Ventil wieder geschlossen. Auf diese Weise kann, wie in Fig. 7e dargestellt jede Pipette ein anderes Volumen ΔV₁ bis ΔV_{N} aufnehmen. Der Startzeitpunkt kann dabei für jede Pipette individuell gewählt werden. Die Pipetten können z. B. alle gleichzeitig beginnen und dementsprechend zeitlich versetzt stoppen. Sie können auch zeitlich versetzt gestartet werden, so dass die Aufnahme der Proben (16) gleichzeitig beendet wird. Haben alle Pipetten den Vorgang abgeschlossen, wird das Pipettenarray wieder angehoben.
Zum Abgeben der pipettierten Proben, gemäß Fig. 7f wird das Reservoir auf Überdruck "+p" umgeschaltet und das Pipettenarray über der Zielplatte (222) positioniert. Nach dem Absenken der Pipetten, dargestellt in Fig. 7g werden die Ventile geöffnet und die Proben je nach Bedarf teilweise oder nahezu vollständig abgegeben. Sobald die überwachte Phasengrenze einer Pipette die vorgegebene Position (Sollwert) erreicht hat, wird das entsprechende Ventil geschlossen. Ist dieser Vorgang für alle Pipetten beendet, wird das Pipettenarray, wie in Fig 6h dargestellt angehoben. Anschließend können weitere Mikrotiterplatten befüllt (siehe Fig. 7g) oder ein neuer Dosiervorgang begonnen werden (siehe Fig. 7a).
Bei dem in Fig. 6 dargestellten Gerät laufen die in Fig. 7b bis 7d dargestellten Schritte für alle Pipetten parallel ab, Mess- und Trennblasen sind für alle Pipetten gleich groß. Die aufgenommenen Probenvolumina, siehe Fig. 7e, sind ebenfalls alle gleich. Beim Abgeben gemäß Fig. 7g lassen sich die Pipetten hingegen getrennt steuern.

### Bezugszeichenliste

- 1: Kapillare, Pipettenkapillare
- 2: Sensorchip
- 3: Systemmedium
- 4: Anschlussmöglichkeiten (Bondpad)

- 5: sensoraktive Teilelektroden
- 6: Passivierungsschicht
- 7: Verbindung zwischen den Teilelektroden
- 8: Elektrodenpaar
- 9: Aktor
- 10: Regelkreis
- 11: Teilelektrodenpaar
- 12: Regelelement
- 13: Phasengrenze
- 14: Pipettenspitze
- 15: Probengefäß
- 16: Probe
- 17: Trennblase
- 18: Sensorelement
- 19: Blase des zweiten Mediums
- 20: Schlauch
- 21: Spritzenpumpe
- 22: Mikrotiterplatte, 221 Quellplatte, 222 Zielplat
- 23: Kolben
- 24: Kolbenarray
- 25: Luft
- 26: Reservoir des System-mediums
- 27: Elektrolysezelle
- 28: Spülwanne
- 29: Antrieb
- 30: regelbare Pipette

## Patentansprüche

1. Pipettensystem, mit
- einer Pipettenkapillare (1),
- einem Aktor (9) zur Einstellung der Position einer Phasengrenze (13) zwischen einem Systemmedium (3) und einem zweiten Medium (19) in der Pipettenkapillare,
- einem Sensorelement (18) zur Positionsmessung der Phasengrenze, und
- einem Regelelement (12), von dem der Aktor (9) in Abhängigkeit von einem Ausgangssignal des Sensorelements (18) ansteuerbar ist,
**dadurch gekennzeichnet,**
**dass** das Sensorelement (18) ein elektrischer Sensor ist, der aus einem Substrat (2) und mehreren einzeln an elektrischen Anschlussmöglichkeiten (4) kontaktierbaren, auf das Substrat (2) aufgebrachten Eiektroden besteht, wobei die Elektroden aus mit elektrischen Verbindungen (7) vernetzten sensoraktiven Teilelektroden (5) bestehen und sich die Teilelektroden (5) von jeweils zwei Elektroden immer als Teilelektrodenpaare (11) beabstandet gegenüberliegen und die so gebildeten Elektrodenpaare (8) sich periodisch über die Sensorlänge wiederholen.

2. Pipettensystem nach Anspruch 1,
**dadurch gekennzeichnet,**
**dass** es sich bei der Phasengrenze um eine Phasengrenze zwischen einer Flüssigkeit als Systemmedium (3) und einem Gas als zweitem Medium (19), oder zwischen einer elektrisch leitfähigen Flüssigkeit und einer nicht elektrisch leitfähigen Flüssigkeit, wobei die beiden Flüssigkeiten nicht mischbar sind, handelt.

3. Pipettensystem nach Anspruch 1 oder 2,
**dadurch gekennzeichnet,**
**dass** die Phasengrenze dadurch gebildet wird, dass eine Blase des zweiten Mediums (19) zwischen dem Systemmedium (3) innerhalb der Pipettenkapillare eingeschlossen ist.

4. Pipettensystem nach Anspruch 3,
**dadurch gekennzeichnet,**
**dass** es sich bei der Blase um eine Luftblase und bei dem Systemmedium (3) um eine wässrige Lösung handelt.

5. Pipettensystem nach einem der Ansprüche 1 bis 4,
**dadurch gekennzeichnet,**
**dass** ein Antrieb (29) zur Beaufschlagung des Systemmediums (3) mit einer pneumatischen oder hydraulischen Kraft vorgesehen ist, wodurch ein Strom des Systemmediums (3) in der Pipettenkapillare erzeugbar ist.

6. Pipettensystem nach Anspruch 5,
**dadurch gekennzeichnet,**
**dass** es sich bei dem Antrieb (29) um ein Reservoir mit Systemmedium (3) handelt, wobei das Reservoir mit einem Ende der Pipettenkapillare verbunden ist.

7. Pipettensystem nach Anspruch 6,
**dadurch gekennzeichnet,**
**dass** es sich bei dem Antrieb (29) um einen Kolbenantrieb oder einen Spritzpumpenantrieb handelt und/oder dass der Aktor (9) den Strom steuert.

8. Pipettensystem nach einem der Ansprüche 1 bis 7,
**dadurch gekennzeichnet,**
**dass** es sich bei dem Aktor (9) um ein mechanisches oder elektromechanisches Ventil oder um eine Elektrolysezelle (27) handelt.

9. Pipettensystem nach einem der Ansprüche 1 bis 8,
**dadurch gekennzeichnet,**
**dass** es sich bei dem Regelelement (12) um eine elektronische Schaltung handelt.

10. Pipettensystem nach einem der Ansprüche 1 bis 9,
**dadurch gekennzeichnet,**
**dass** der Sensor derart an der Pipettenkapillare befestigt ist, dass sich die sensoraktiven Teilelektroden (8) innerhalb der Pipettenkapillare befinden und die elektrischen Anschlussmöglichkeiten sich außerhalb der Pipettenkapillare befinden und dass sich mindestens eine Phasengrenze im Bereich des Sensors befindet.

11. Pipettenarray mit mehreren Pipettensystemen nach einem der Ansprüche 1 bis 10.

12. Pipettenarray nach Anspruch 11,
**dadurch gekennzeichnet,**
**dass** entweder bei der Arbeitsphase Aufnehmen oder bei der Arbeitsphase Abgeben von Probenflüssigkeit die Pipettensysteme einzeln regelbar sind.

13. Verfahren zum Befüllen der Pipettenkapillare des Pipettensystems und/oder Pipettenarrays nach einem der Ansprüche 1 bis 12, mit den Verfahrenschritten
- vollständiges Befüllen der Pipettenkapillare des Pipettensystems mit dem Systemmedium (3),
- Erzeugen einer Blase bestehend aus dem zweiten Medium (19) durch Ansaugen desselben und nachfolgendes Ansaugen von Systemmedium (3),
- Ansaugen einer Gasblase (17) zur Trennung des Systemmediums (3) von einer zu pipettierenden Probenflüssigkeit (16) derart, dass die Phasengrenze zwischen Systemmedium (3) und zweitem Medium (19) innerhalb der Sensorlänge liegt.

14. Verfahren nach Anspruch 13,
**dadurch gekennzeichnet,**
**dass** nach dem Verfahrensschritt des vollständigen Befüllens der Pipettenkapillare Referenzmessungen am Systemmedium (3) mit dem Sensorelement (18) durchgeführt werden.

15. Verfahren nach Anspruch 13 oder 14,
**dadurch gekennzeichnet,**
**dass** die Ausdehnung der Blase des zweiten Mediums (19) der Sensorlänge entspricht.

16. Verfahren nach einem der Ansprüche 13 bis 15,
**dadurch gekennzeichnet,**
**dass** bei Einsatz eines Pipettenarrays entweder bei der Arbeitsphase Aufnehmen oder bei der Arbeitsphase Abgeben von Probenflüssigkeit die Pipettensysteme einzeln geregelt werden.

## Claims

1. Pipette system comprising
- a pipette capillary tube (1),
- an actuator (9) for setting the position of a phase boundary (13) between a system medium (3) and a second medium (19) in said pipette capillary tube,
- a sensor element (18) for measuring the position of the phase boundary, and
- a regulating element (12) by means of which said actuator (9) can be controlled in response to an output signal from said sensor element (18),
**characterised in**
**that** said sensor element (18) is an electric sensor consisting of a substrate (2) and several electrodes applied on said substrate (2) and adapted for being contacted individually at potential electric terminals (4), wherein said electrodes consist of sensor-active sub-electrodes (5) linked by electrical connections (7) to form a network and wherein said sub-electrodes (5) of two respective electrodes always oppose each other at a spacing as pairs of sub-electrodes (11), with the pairs of electrodes (8) so formed periodically repeating over the length of said sensor.

2. Pipette system according to Claim 1,
**characterised in**
**that** said phase boundary is a phase boundary between a liquid as system medium (3) and a gas as second medium (19) or between an electrically conductive liquid and an electrically non-conductive liquid, with both liquids being immiscible.

3. Pipette system according to Claim 1 or 2,
**characterised in**
**that** said phase boundary is formed by the provision that a bubble of said second medium (19) is enclosed between said system medium (3) inside said pipette capillary.

4. Pipette system according to Claim 3,
**characterised in**
**that** said bubble is an air bubble and that said system medium (3) is an aqueous solution.

5. Pipette system according to any of the Claims 1 to 4,
**characterised in**
**that** a drive means (29) is provided for acting upon said system medium (3) with a pneumatic or hydraulic force so as to create a flow of said system medium (3) in said pipette capillary tube.

6. Pipette system according to Claim 5,
**characterised in**
**that** said drive means (29) is a reservoir containing a system medium (3), with said reservoir being connected to one end of said pipette capillary tube.

7. Pipette system according to Claim 6,
**characterised in**
**that** said drive means (29) is a plunger driver or a syringe pump driver and/or that said actuator (9) controls the flow.

8. Pipette system according to any of the Claims 1 to 7,
**characterised in**
**that** said actuator (9) is a mechanical or electro-mechanical valve or an electrolytic cell (27).

9. Pipette system according to any of the Claims 1 to 8,
**characterised in**
**that** said regulating element (12) is an electronic circuit.

10. Pipette system according to any of the Claims 1 to 9,
**characterised in**
**that** said sensor is fastened on said pipette capillary tube in such a way that said sensor-active sub-electrodes (8) are located inside said pipette capillary tube and that said potential electric terminals are provided outside said pipette capillary tube, and that at lest one phase boundary is present in the region of said sensor.

11. Pipette array comprising several pipette systems according to any of the Claims 1 to 10.

12. Pipette array according to Claim 11,
**characterised in**
**that** said pipette systems are individually controllable either in the operating stage "collection" or in the operating stage "discharge" of sample liquid.

13. Method of charging the pipette capillary tube of the pipette system and/or pipette array according to any of the Claims 1 to 12, including the following steps:
- completely charging said pipette capillary tube of said pipette system with said system medium (3),
- creating a bubble consisting of said second medium (19) by aspirating same and by subsequently aspirating some system medium (3),
- aspirating a gas bubble (17) for separating said system medium (3) from a sample liquid (16) to be pipetted in such a way that the phase boundary between said system medium (3) and said second medium (19) is located within the length of said sensor.

14. Method according to Claim 13,
**characterised in**
**that** after the operating step of completely charging said pipette capillary tube, reference measurements are carried out on said system medium (3) by means of said sensor element (18).

15. Method according to Claim 13 or 14,
**characterised in**
**that** the expansion of the bubble of said second medium (19) corresponds to the sensor length.

16. Method according to any of the Claims 13 to 15,
**characterised in**
**that** when a pipette array is used said pipette systems are individually controlled either in the operating stage "collection" or in the operating stage "discharge" of sample liquid.

## Revendications

1. Système de pipette, comprenant
- un capillaire de pipette (1),
- un acteur (9) à ajuster la position d'une limite de phase (13) entre un milieu (3) du système et un deuxième milieu (19) dans ladite capillaire de pipette,
- un élément capteur (18) à mesurer la position de la limite de phase, et
- un élément régulateur (12) moyennant duquel ledit acteur (9) se peut commander en fonction d'un signal de sortie dudit élément capteur (18),
**caractérisé en ce**
**que** ledit élément capteur (18) est un détecteur électrique composé d'un substrat (2) et plusieurs électrodes appliquées sur ledit substrat (2), qui peuvent être contacté individuellement aux connexions électriques potentielles (4), lesdites électrodes étant constitué par des électrodes partielles (5) actives en une fonction de capteur, qui sont mises en réseau avec des connexions électriques (7), et lesdites électrodes partielles (5) (5) de deux électrodes respectives étant toujours opposées à un écart en tant que paires d'électrodes partielles (11), et auxdites paires d'électrodes (8) ainsi formées se répétant, de manière périodique, sur la longueur du capteur.

2. Système de pipette selon la revendication 1,
**caractérisé en ce**
**que** la limite de phase est une limite de phase entre un liquide servant comme ledit milieu de système (3) et un gaz servant en tant que ledit deuxième milieu (19), ou entre un liquide électroconducteur et un liquide non électroconducteur, auxdits deux liquides étant immiscible.

3. Système de pipette selon la revendication 1 ou 2,
**caractérisé en ce**
**que** la limite de phase étant formée par la mesure qu'une bulle dudit deuxième milieu (19) est renfermée à l'intérieur par ledit milieu de système (3) au-dedans de ladite capillaire de pipette.

4. Système de pipette selon la revendication 3,
**caractérisé en ce**
**que** ladite bulle et une bulle d'air et que ledit milieu de système (3) est une solution aqueuse.

5. Système de pipette selon une quelconque des revendications 1 à 4,
**caractérisé en ce**
**qu'**une unité motrice (29) est disposé afin d'appliquer une force pneumatique ou hydraulique audit milieu de système (3), ce qui permet la génération d'un courant dudit milieu de système (3) dans ladite capillaire de pipette.

6. Système de pipette selon la revendication 5,
**caractérisé en ce**
**que** ladite unité motrice (29) est un réservoir contenant ledit milieu de système (3), ce réservoir étant relié à une extrémité de ladite capillaire de pipette.

7. Système de pipette selon la revendication 6,
**caractérisé en ce**
**que** ladite unité motrice (29) est un mécanisme à piston ou un mécanisme à pompe de projection et/ou que ledit acteur (9) commande le courant.

8. Système de pipette selon une quelconque des revendications 1 à 7,
**caractérisé en ce**
**que** ledit acteur (9) est une soupape mécanique ou électromécanique ou une cellule d'électrolyse (27).

9. Système de pipette selon une quelconque des revendications 1 à 8,
**caractérisé en ce**
**que** ledit élément régulateur (12) est un circuit électronique.

10. Système de pipette selon une quelconque des revendications 1 à 9,
**caractérisé en ce**
**que** ledit capteur est fixé à ladite capillaire de pipette d'une telle façon, que lesdites électrodes partielles (8) actives en tant que détecteur se trouvent au-dedans de ladite capillaire de pipette et que les connexions électriques potentielles se trouve à l'extérieur de ladite capillaire de pipette, et en ce qu'au moins une limite de phase se trouve dans la zone dudit capteur.

11. Matrice aux pipettes comprenant une pluralité de systèmes de pipette selon une quelconque des revendications 1 à 10.

12. Matrice aux pipettes selon la revendication 11,
**caractérisé en ce**
**que** lesdits systèmes de pipette se peuvent commander individuellement, soit dans la phase d'opération « réception du liquide d'échantillon », soit dans la phase d'opération « débit du liquide d'échantillon ».

13. Procédé à remplir le capillaire de pipette d'un système de pipette et/ou de la matrice aux pipettes selon une quelconque des revendications 1 à 12, comprenant les opérations suivantes :
- remplir le capillaire de pipette du système de pipette complètement avec ledit milieu de système (3),
- engendrer une bulle formée par ledit deuxième milieu (19) par aspiration du dernier et par aspiration suivante du milieu de système (3),
- aspirer une bulle de gaz (17) afin de séparer ledit milieu de système (3) d'un liquide d'échantillon (16) à pipetter, d'une telle manière, que la limite de phase entre ledit milieu de système (3) et ledit deuxième milieu (19) se trouve au-dedans de la longueur du capteur.

14. Procédé selon la revendication 13,
**caractérisé en ce**
**que** suivant l'opération de remplissage complet de ladite capillaire de pipette, on réalise des mesures de référence audit milieu de système (3) moyennant ledit élément capteur.

15. Procédé selon la revendication 13 ou 14,
**caractérisé en ce**
**que** l'expansion de ladite bulle dudit deuxième milieu (19) correspond à la longueur dudit capteur.

16. Procédé selon une quelconque des revendications 13 à 15,
**caractérisé en ce**
**que** quand une matrice aux pipettes est appliquée, les systèmes de pipette sont réglés individuellement, soit dans la phase d'opération « réception du liquide d'échantillon », soit dans la phase d'opération « débit du liquide d'échantillon ».
